# EUROPÄISCHE PATENTSCHRIFT

(11) **EP 1 879 041 B1**
(45) Veröffentlichungstag und Bekanntmachung des Hinweises auf die Patenterteilung: **20.07.2011**
(21) Anmeldenummer: 07012116.5
(22) Anmeldetag: 21.06.2007
(51) Int. Cl.: G01S 3/86, G10K 11/00

(54) **Vorrichtung zur Erfassung und Ortung von Geräuschemissionen**
System for recording and locating acoustic emissions
Dispositif d'enregistrement et de localisation d'émissions de bruits

(30) Priorität: 07.07.2006 DE 102006031458
(43) Veröffentlichungstag der Anmeldung: 16.01.2008
(73) Patentinhaber: Howaldtswerke-Deutsche Werft GmbH, 24143 Kiel (DE)
(72) Erfinder: Stavenhagen, Alexander, Dr., 24248 Mönkeberg (DE)
(74) Vertreter: Vollmann, Heiko

(56) Entgegenhaltungen:
- CA-A1- 1 087 291
- US-A- 5 323 362
- US-A- 5 412 622
- US-B1- 6 370 085
- MINNITI R J III: "ReFOCUSD: A Technique for Real-Time Enhancement of Low-Frequency SONAR Images in Dynamic Situations" OCEANS, 2005. PROCEEDINGS OF MTS/IEEE WASHINGTON, DC, USA 18-23 SEPT. 2005, PISCATAWAY, NJ, USA,IEEE, 18. September 2005 (2005-09-18), Seiten 1-6, XP010920683 ISBN: 0-933957-34-3
- ORR C W ET AL: "NOARL Autonomous Acoustic Arrays" OCEAN TECHNOLOGIES AND OPPORTUNITIES IN THE PACIFIC FOR THE 90'S. HONOLULU, OCT. 1 - 3, 1991, PROCEEDINGS OF THE OCEAN ENGINEERING IN THE ENVIRONMENT CONFERENCE. (OCEANS), NEW YORK, IEEE, US, Bd. VOL. 3, 1. Oktober 1991 (1991-10-01), Seiten 1480-1484, XP010053268 ISBN: 0-7803-0202-8
- BJORK B R ET AL: "Submarine Position Information For Acoustic Measurements" MASTERING THE OCEANS THROUGH TECHNOLOGY. NEWPORT, RHODE ISLAND, OCT. 26 - 29, 1992, PROCEEDINGS OF THE OCEANS CONFERENCE, NEW YORK, IEEE, US, Bd. VOL. 2, 26. Oktober 1992 (1992-10-26), Seiten 788-792, XP010106841 ISBN: 0-7803-0838-7

## Beschreibung

Die Erfindung betrifft eine Vorrichtung zur Erfassung und Ortung von Geräuschemissionen bewegter Objekte in Form von U-Booten unter Wasser mit den im Oberbegriff des Anspruchs 1 angegebenen Merkmalen.

Bei Unterseebooten, insbesondere für militärische Zwecke, stellt die Geräuschemission einen der wesentlichen Faktoren für deren Ortbarkeit dar. Es ist daher stets ein Ziel, die Geräuschemission eines Unterseeboots so gering wie möglich zu halten, um seine Ortung zu erschweren. Es ist daher nicht nur bei Neukonstruktionen, sondern auch bei der Inbetriebstellung eines Unterseebootes üblich zu überprüfen, ob die zugesicherten Emissionswerte eingehalten werden oder ob und ggf. wo unzulässig hohe Geräuschemissionen auftreten, um diese dann ggf. zu beseitigen.

Hierzu ist es bekannt, an einer vorgegebenen Stelle unter Wasser ortsfest ein Hydrofon anzubringen und dann das Unterseeboot in einem definierten Abstand dazu vorbeifahren zu lassen, um die Geräuschemission zu überprüfen und ggf. die Bereiche des Unterseeboots herauszufinden, an denen unzulässig hohe Geräuschemissionen auftreten.

Ein Nachteil dieser ortsfesten Hydrofon-Anordnungen ist jedoch, dass die Überprüfung nur an diesem bestimmten Ort erfolgen kann, was gewisse Nachteile mit sich bringt. Da moderne Unterseeboote heutzutage nur noch vergleichsweise geringe Geräuschemissionen aufweisen, wird es zunehmend schwieriger, exakte Messungen zu erhalten, da die in der Umgebung vorhandenen Störpegel, wie sie beispielsweise durch die Schifffahrt in der weiteren Umgebung oder auch durch Wellenschlag und Wettereinflüsse hervorgerufen werden, den zu messenden Geräuschpegel bis zur Unkenntlichkeit überlagern.

Eine gattungsgemäße Vorrichtung ist aus MINNITI R J III: "ReFOCUSD: A Technique for Real-Time Enhancement of Low-Frequency SONAR Images in Dynamic Situations" OCEANS, 2005. PROCEEDINGS OF MTS/IEEE WASHINGTON, DC, USA 18-23 SEPT. 2005, PISCATAWAY, NJ, USA, IEEE, 18. September 2005 (2005-09-18), Seiten 1-6, XPO10920683 ISBN: 0-933957-34-3 bekannt. Die dort beschriebene Vorrichtung weist ein Array von mehreren über- und nebeneinander mit Abstand angeordneten Hydrophonen auf, deren elektrische Ausgangssignale einer Auswerteinrichtung zugeführt sind. Diese Hydrophonarrays sind an Kabeln verankert, die bojenartig befestigt sind, wobei die Arrays höhenverstellbar am Kabel angeordnet sind.

Eine ähnliche Anordnung ist aus US-A-5,323,362 bekannt, in der im einzelnen ausgeführt ist, wie die Signalauswertung zweckmäßigerweise erfolgt. Aus US-B1-6,370,085 zählt es zum Stand der Technik, mehrere Hydrophone an Seilen um ein Unterseeboot herum anzuordnen, um auf diese Weise den Schall möglichst objektnah und über den gesamten Umfang des U-Bootes herum zu erfassen.

Vor diesem Hintergrund liegt der Erfindung die Aufgabe zugrunde, eine gattungsgemäße Vorrichtung so auszubilden, dass sie zur Erfassung spezieller Frequenzen/Frequenzspektren abstimmbar ist.

Diese Aufgabe wird gemäß der Erfindung durch die in Anspruch 1 angegebenen Merkmale gelöst. Vorteilhafte Ausgestaltungen der Erfindung sind in den Unteransprüchen sowie der nachfolgenden Beschreibung angegeben.

Das Verfahren zur Erfassung und Ortung von Geräuschemissionen bewegter Objekte in Form von U-Booten unter Wasser arbeitet mit einer Vielzahl von mit Abstand nebeneinander und übereinander und im Wesentlichen in einer Ebene angeordneten Hydrophonen, mit denen Schallwellen des quer zu dieser Ebene verfahrenen Objekts erfasst und registriert werden, wobei anhand der zeitlichen Korrelation der erfassten Schallwellen eine räumliche Zuordnung der Schallemission erfolgt. Da Anordnung und Abstand der Hydrophone zueinander bekannt ist, kann anhand der zeitlichen Verschiebung der von den Hydrophonen erfassten Schallwellen ermittelt werden, aus welcher Richtung diese kommen und damit auch der Ort der Schallemission bestimmt werden. Es kann, wenn darüber hinaus auch die genaue Position des Bootskörpers bekannt ist, insbesondere über die zeitliche Korrelation der erfassten Schallwellen eine räumliche Zuordnung erfolgen, welche eine gegenüber bekannten Verfahren wesentlich exaktere Ortung von Geräuschemissionen am Objekt, d. h. am U-Boot ermöglicht, auch wenn die Geräuschemission mit einem nur vergleichsweise geringen Schallpegel erfolgt.

Es versteht sich, dass die Hydrophone zweckmäßigerweise so mit Abstand zueinander anzuordnen sind, dass sie in Richtung zum Objekt nebeneinander bzw. übereinander liegen. Eine besonders genaue Erfassung wird erzielt, da eine Vielzahl von Hydrophonen eingesetzt wird, die nebeneinander und übereinander nach Art einer Matrix angeordnet sind und das geräuschmäßig zu erfassende Objekt quer zu dieser Matrix verfahren wird. Die Auswertung kann nicht nur durch die Anzahl der verwendeten Hydrophone verbessert werden, sondern auch dadurch, dass in der Auswerteinrichtung die Position des Objektes zur Messeinrichtung angegeben wird.

Vorteilhaft erfolgt über die räumliche Zuordnung eine Unterscheidung zwischen Fremd- und/oder Störgeräuschen einerseits und Objektgeräuschen andererseits derart, dass zur weiteren Auswertung nur die den Objektgeräuschen zugehörigen Schallwellen ausgewertet werden. Das Verfahren des gleichzeitigen Schallmessens über mehrere Hydrophone ermöglicht also zum einen in vorteilhafter Weise die Unterscheidung zwischen objekteigenen Emissionen einerseits und Störgeräuschen bzw. Fremdemissionen andererseits, wobei das Verfahren darüber hinaus dann nach Elimination der hier nicht interessierenden Fremd- oder Störgeräusche im Weiteren eine gegenüber dem Stand der Technik wesentlich genauere räumliche Zuordnung der Objektgeräusche ermöglicht, die und nur die zur weiteren Auswertung herangezogen werden. Es ist also nach erfolgter Unterscheidung eine sehr genaue räumliche Zuordnung möglich, je nach Anordnung und Anzahl der verwendeten Hydrophone, so dass nicht nur eine räumliche Zuordnung zum Objekt als solchem, sondern darüber hinaus auch eine räumliche Zuordnung innerhalb des Objektes erfolgen kann, was die Fehlersuche (Emissionsquelle) innerhalb des Objektes, also innerhalb des U-Bootes wesentlich erleichtert.

Der vorrichtungsmäßige Aufbau zur Erfassung und Ortung von Geräuschemissionen bewegter Objekte unter Wasser in Form von U-Booten unter Wasser, zum Ausführen des vorgenannten Verfahrens ist gemäß der Erfindung dadurch gekennzeichnet, dass zwei oder mehr Hydrophone mit Abstand übereinander und zwei oder mehr Hydrophone mit Abstand nebeneinander angeordnet sind, deren elektrische Ausgangssignale einer gemeinsamen elektronischen Auswerteinrichtung zugeführt sind. Aufgrund der mit Abstand nebeneinander und übereinander angeordneten Hydrophone können Laufzeitunterschiede bestimmt und somit räumliche Zuordnungen der empfangenen Schallsignale erfolgen. Wenn hierzu auch noch Positionsangaben des bewegten Objektes hinzukommen, kann innerhalb der Auswerteinrichtung eine noch genauere Zuordnung erfolgen. Die Auswerteinrichtung wird zweckmäßigerweise durch eine digitale Datenverarbeitungsanlage gebildet, wobei die Auswertung mittels einer darin implementierten Software, also mittels eines geeigneten Auswertalgorithmuses erfolgt, mit welcher die Ausgangssignale der Hydrophone korreliert und räumlich zugeordnet werden.

Durch die zwei oder mehr Hydrophone, die mit Abstand übereinander unter Wasser angeordnet sind, können höhenmäßige Differenzierungen über Laufzeitunterschiede der Schallwellen ermittelt werden. Eine Differenzierung in Richtung quer dazu ist dann besonders gut möglich mittels der zwei oder mehr mit Abstand nebeneinander angeordneten Hydrophone möglich.

Es versteht sich, dass eine räumliche Zuordnung und damit Unterscheidbarkeit des Ortes der Herkunft der empfangenen Schallwellen dann besonders genau und effektiv möglich ist, wenn eine Vielzahl von Hydrophonen nebeneinander und übereinander nach Art einer Matrix angeordnet sind, wobei das Objekt quer zu der durch die Matrix aufgespannten Ebene vorbei bewegt wird. Eine solche Matrix von Hydrophonen erlaubt eine besonders exakte räumliche Zuordnung, bedingt aber aufgrund der Vielzahl der möglichen Signalquellen und Empfänger einen entsprechend aufwändigen Auswerte-Algorithmus.

Eine Verfeinerung der Messergebnisse kann erfindungsgemäß dadurch erzielt werden, dass der Abstand der Hydrophone zueinander nicht fest vorgegeben, sondern wie es gemäß der Erfindung vorgesehen ist, veränderbar ist. Der veränderbare Abstand der Hydrophone zueinander ist insbesondere dann von Vorteil, wenn die Anordnung zur Betrachtung und Analyse spezieller Frequenzen, zu denen Wellenlängen gehören, von Interesse ist. Dann kann die Anordnung durch definierte Hydrophonabstände für bestimmte Frequenzen besonders empfindlich oder auch unempfindlich abgestimmt werden. Dies ist insbesondere hinsichtlich der Höhenanordnung der Hydrophone zueinander in einfacher Weise zu realisieren. So können, wenn eine Reihe von Hydrophonen mit Abstand übereinander angeordnet sind, diese an einem gemeinsamen Seil angeordnet sein, wobei jedes Hydrofon über mindestens eine angetriebene Rolle an dem Seil motorisch verfahrbar gelagert ist.

Gemäß einer bevorzugten Ausbildung der Erfindung sind mehrere Hydrophone nach Art einer Matrix in einem beispielsweise rechteckigen Rahmen vorgesehen, in welchem nebeneinander angeordnete Profile befestigt sind, an denen jeweils Hydrophone mit Abstand zueinander angeordnet sind. Dieser Rahmen mit einer Matrix von Hydrophonen ist dann vorteilhaft über mindestens zwei Seile befestigt und vorteilhaft motorisch an diesen Seilen verfahrbar. Dabei ist der Rahmen typischerweise so angeordnet, dass die darin nebeneinander angeordneten Profile mit den Hydrophonen im Wesentlichen vertikal liegen, also alle Hydrophone in einer durch den Rahmen aufgespannten Ebene angeordnet sind. Durch Verfahren des Rahmens längs der Seile kann dieser höhenmäßig ausgerichtet werden.

Gemäß der Erfindung ist es vorgesehen, die Vorrichtung nicht nur ortsfest anzuordnen, sondern insbesondere auch mobil, d. h. von einem Schiff aus zu betreiben. Hierzu ist vorgesehen, ein Seil, das entweder mehrere übereinander angeordnete Hydrophone oder aber den vorgenannten Rahmen trägt, am unteren Ende mit einem Ankergewicht zu beschweren und damit auf dem Meeresboden festzulegen und am oberen Ende mittels eines Schwimmkörpers festzulegen. Es versteht sich, dass zur Festlegung des vorgenannten Rahmens vorteilhaft zwei Seile und somit auch zwei Ankergewichte bzw. Schwimmkörper vorgesehen sind. Dabei sollte ein Schwimmkörper vorzugsweise so ausgelegt sein, dass er während des Messbetriebs der Vorrichtung im Wesentlichen unter der Wasseroberfläche angeordnet ist und somit nicht den Wellenbewegungen folgt und damit zusätzliche Bewegung in das Messsystem einbringt und selbst Geräuschemissionen verursacht.

Zweckmäßigerweise ist insbesondere für den mobilen Einsatz eine Release-Vorrichtung zwischen Ankergewicht und Seil vorgesehen. Diese ermöglicht, das Seil vom Ankergewicht zu lösen und damit ohne das auf See doch vergleichsweise aufwändige Heben der Ankergewichte die kostenintensive Vorrichtung schnell und einfach bergen zu können.

Um den elektromotorischen Antrieb für die einzelnen Hydrophone am Seil möglichst leicht ausbilden zu können, ist gemäß einer Weiterbildung der Erfindung vorgesehen, dass einem, vorzugsweise jedem Hydrofon ein Auftriebskörper zugeordnet ist, der so dimensioniert ist, dass das Eigengewicht unter Wasser im Wesentlichen kompensiert wird, d. h. dass ein Hydrofon unter Wasser quasi schwebend aufgehängt ist und der zugehörige Motor beim Verfahren des jeweiligen Hydrofons am Seil fast keine Gewichtskräfte, sondern im Wesentlichen nur Massenträgheits- und Strömungskräfte überwinden muss. Ein solcher Auftriebskörper zur Gewichtskompensation unter Wasser ist dann erforderlich, wenn die Gewichtskraft des Hydrophons mit zugehörigem Antrieb größer ist als die Haftreibung auf dem vertikalen Träger, typischerweise dem Seil. Hierfür werden zweckmäßigerweise Rollensysteme eingesetzt, welche vertikal verfahrbar sind.

Eine solche Ausbildung ist zweckmäßigerweise insbesondere für die Rahmenanordnung vorgesehen sein. Es ist vorteilhaft auch der Rahmen selbst durch einen oder mehrere geeignete Auftriebskörper gewichtskompensiert auszubilden, um auch diesen mit nur geringen Stellkräften und somit kleinen Motoren längs der Seile verfahren zu können.

Insbesondere beim mobilen Einsatz der erfindungsgemäßen Vorrichtung wird die Hydrophonanordnung typischerweise von einem Schiff mittels eines Krans im Wasser installiert, wobei dann das Schiff mit Abstand zur Vorrichtung vor Anker geht und z.B. kabelgebunden die Ausgangssignale der Hydrophone empfängt und der an Bord befindlichen Auswerteinrichtung zuführt.

Eine Kabelverbindung kann jedoch entfallen, wenn eine kabellose Datenübertragung zwischen Auswerteinrichtung und Schiff bzw. auch umgekehrt bei bidirektionaler Datenverbindung erfolgt. Für eine solche Funkverbindung ist es jedoch zweckmäßig, eine über Wasser befindliche Antenne zu haben. Dies wird in vorteilhafter Weise dadurch realisiert, dass mindestens ein Schwimmkörper mit einer über die Wasseroberfläche herausragenden Antenne versehen ist, über die drahtlos von den Hydrophonen aufgenommene Messdaten an die Auswerteinrichtung übermittelbar sind bzw. in umgekehrter Richtung Steuerbefehle für den Hydrophonen zugeordnete Elektromotoren übermittelt werden können, um die Hydrophone in gewünschter Weise zu verfahren. Die Stromversorgung der Vorrichtung wird zumindest bei drahtloser Datenübertragung zweckmäßigerweise über einen über oder unter Wasser befindlichen und die Vorrichtung versorgenden Akku, eine Brennstoffzelle oder dergleichen erfolgen.

Die Erfindung ist nachfolgend anhand eines in der Zeichnung dargestellten Ausführungsbeispiels im Einzelnen erläutert. Es zeigen:
- Fig. 1: in stark vereinfachter Darstellung einen Teil einer erfin- dungsgemäßen Vorrichtung mit einer Vielzahl von über- einander angeordneten Hydrophonen,
- Fig. 2: eine erfindungsgemäße Vorrichtung mit einer Matrix von Hydrophonen,
- Fig. 3: das Funktionsprinzip der Erfassung der Laufzeitunterschie- de der Schallwellen und
- Fig. 4: zwei Matrix-Anordnungen in einem Rahmen.

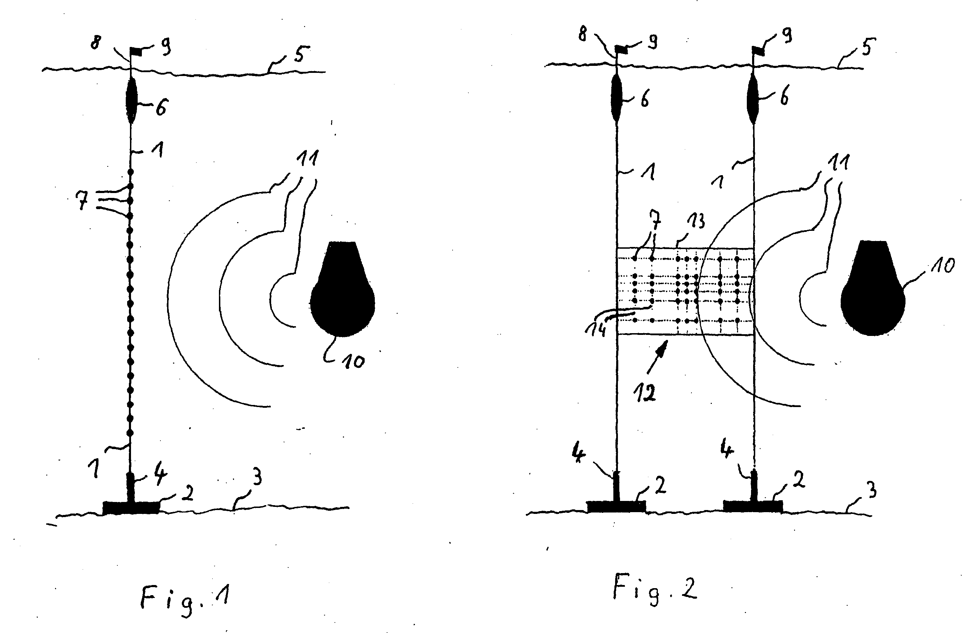

In Fig. 1 ist ein Teil einer erfindungsgemäßen aus einer Vielzahl von mit Abstand übereinander und mit Abstand nebeneinander angeordneter und in einer Ebene liegender Hydrophone aufgebaute Vorrichtung schematisch dargestellt. Ein Seil 1, typischerweise ein Stahlseil ist an einem Ankergewicht 2 befestigt, das beispielsweise aus Beton besteht und mittels des Seils 1 bis zum Meeresgrund 3 herabgelassen ist.

Nahe aber unter der Wasseroberfläche 5 ist am Seil 1 ein Schwimmkörper 6 angeordnet, dessen Auftrieb konstruktiv so gewählt ist, dass das Seil 1 mit den daran befindlichen Hydrophonen 7 im Wesentlichen vertikal unter Wasser gespannt angeordnet ist. Der Schwimmkörper 6 hat eine längliche zäpfchenähnliche Form und ist, wie aus Fig. 1 ersichtlich, in Richtung des Seils 1, d.h. im Wesentlichen vertikal ausgerichtet. Diese Anordnung unter Wasser und die schlanke Form des Schwimmkörpers 6 wirkt Schwingungen des Seils 1 entgegen. Der Schwimmkörper 6 ist so angeordnet, dass er unter der Wasseroberfläche 5 befindlich ist, damit nach Möglichkeit wenig wellenschlaginduzierte Geräusche auf den Schwimmkörper 6 und somit das Seil 1 übertragen werden. An der Oberseite des Schwimmkörpers 6 ist in der dargestellten Ausführungsform ein Antennenstab 8 vorgesehen, an dessen Ende eine Fahne 9 zur Kennzeichnung der darunter befindlichen Hydrophonanordnung über Wasser vorgesehen ist.

Auf dem Seil 1 sitzen eine Vielzahl von übereinander angeordneten Hydrophonen 7, die motorisch verfahrbar angeordnet sind. Dabei ist jedes Hydrophon 7 an einer (nicht dargestellten) Antriebseinheit angeordnet, welche mittels mindestens zwei, vorzugsweise drei gegenüberliegenden Rollen unter Einschluss des Seils 1 auf diesem sitzt, von denen eine Rolle motorisch antreibbar ist, so dass die Hydrophone 7 auf die gewünschten Vertikalpositionen am Seil 1 verfahrbar sind, so wie dies für das zu messende Objekt am zweckmäßigsten ist. Es können auch nur einige der Hydrophone 7 mit einer Antriebseinheit versehen und andere fest am Seil 1 angeordnet sein. Zwei oder mehr solcher Seile 1 sind in einer Ebene quer zur Fahrtrichtung des U-Bootes 10 angeordnet.

In Fig. 1 ist ein längs der Hydrophonanordnung vorbeifahrendes U-Boot 10 dargestellt, die von diesem U-Boot 10 ausgehende Schallemission ist in Form von Schallwellen 11 symbolisiert. Es ist ersichtlich, dass bei der dargestellten vertikalen Hydrophonanordnung eine Schallwelle 11, die vom U-Boot 10 ausgeht, zu unterschiedlichen Zeitpunkten an den Hydrophonen 7 ankommt. In der (hier nicht dargestellten) Auswerteinrichtung an Bord eines Schiffes oder ggf. bei stationärer Anordnung am Festland kann nun anhand der Abstände der Hydrophone 7 zueinander und der zeitlichen Korrelation der damit erfassten Schallwellen 11 nicht nur eine eindeutige Zuordnung hinsichtlich der vom U-Boot 10 emittierten Schallwellen 11 erfolgen, sondern es können auch aufgrund dieser Korrelation Störgeräusche und von anderen Objekten ausgehende Emissionen ausgeschaltet werden, so dass mit dieser Hydrophonanordnung auch vergleichsweise geringe Geräuschemissionen zuverlässig und genau geortet werden können.

Die Signalübertragung von den Hydrophonen zur Auswerteinrichtung erfolgt entweder drahtgebunden oder drahtlos über die vorbeschriebene Antenne 8. Die Energieversorgung kann im Ankergewicht 2 oder auch im Schwimmkörper 6 vorgesehen sein.

Damit die Hydrophone 7 und die ggf. vorhandenen Antriebseinrichtungen das Seil 1 gewichtsmäßig wenig belasten, sind diese durch entsprechende Auftriebskörper im Wesentlichen gewichtsausgeglichen gestaltet.

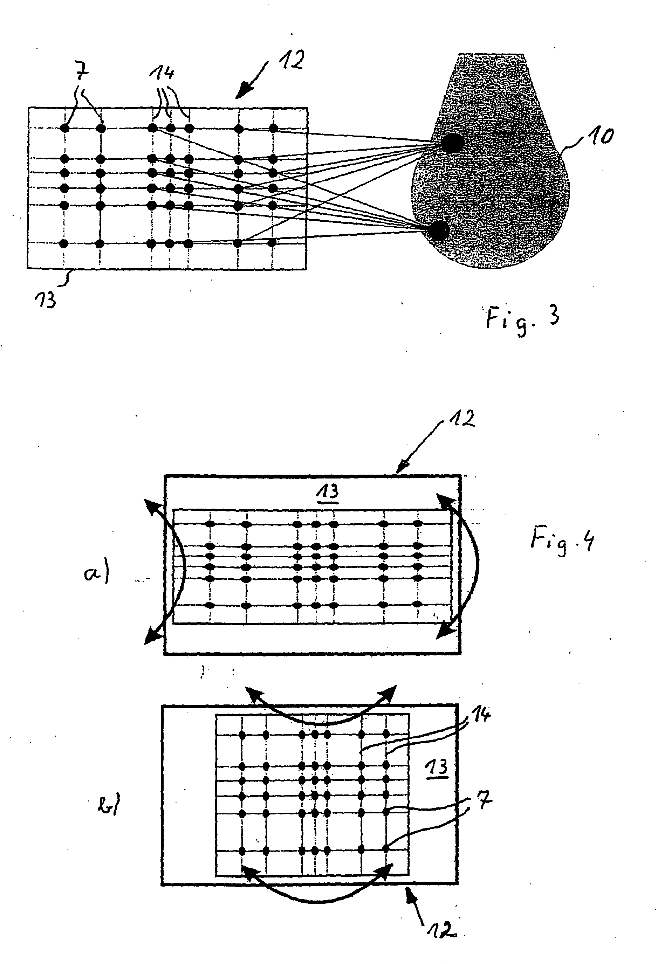

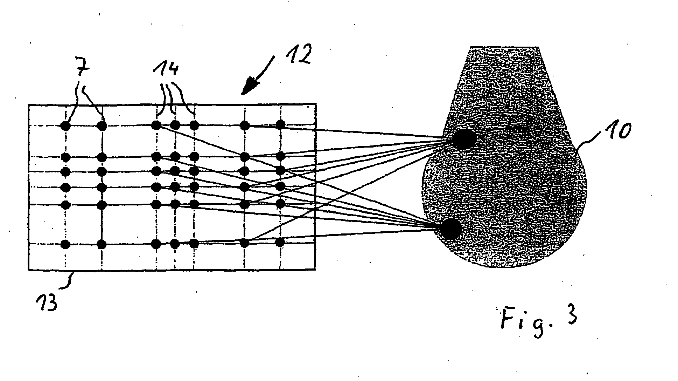

Bei der Anordnung gemäß Fig. 2 ist eine Matrix von Hydrophonen 7 an zwei Seilen 1 unter Wasser befestigt. Durch dieses zweidimensionale Hydrophonarray 12 kann die Ortung der Geräuschemission am Objekt 10 noch wesentlich genauer erfolgen, wie dies anhand von Fig. 3 verdeutlicht ist. Aufgrund der geometrischen Beziehungen (Dimensionierung des Arrays 12, der Abstände der Hydrophone 7 zueinander, der Position des U-Bootes 10, etc.) und der im Wesentlichen planaren Schallausbreitung kann innerhalb der Auswerteinheit insbesondere in Kenntnis der Position des Objektes 10 zum Array 12 eine sehr genaue Positionsbestimmung emittierender Flächenanteile am Objekt 10 selbst erfolgen.

Wie die Figuren 2 und 3 verdeutlichen, ist das Hydrophonarray 12 so angeordnet, dass alle Hydrophone 7 im Wesentlichen in einer vertikalen Ebene liegen, welche quer zur Fortbewegungsrichtung des Objektes 10, hier des U-Bootes 10 angeordnet ist.

Der Aufbau eines solchen Hydrophonarrays 12 erfolgt zweckmäßigerweise wie anhand der Figuren 4a und 4b beispielhaft dargestellt. Dort ist ein aus Metallprofilen gebildeter rechteckiger Rahmen 13 vorgesehen, in dem Profile 14 vertikal angebracht sind, an denen Hydrophone 7 in ähnlicher Weise wie anhand von Fig. 1 vorbeschrieben, motorisch verfahrbar angeordnet sind. Die Abstände der Profile 14 zueinander können unterschiedlich sein. Bei dieser Anordnung können die Hydrophone 7 selbst und ggf. mit den Antriebsvorrichtungen gewichtsausgeglichen sein, hier ist jedoch der Rahmen 13 mit dem darin befindlichen Hydrophonarray 12 gewichtsausgeglichen. Er ist an zwei Seilen 1 mittels zwei Ankergewichten 2 und zwei Schwimmkörpern 6 definiert unter Wasser angeordnet ist. Dabei ist es zweckmäßig, den Rahmen 13, also das gesamte Hydrophonarray 12 verfahrbar auszugestalten, so dass je nach Größe und Abstand des vorbeifahrenden Objektes eine geeignete Höhenstellung angefahren werden kann. Insbesondere wenn mit derselben Vorrichtung sowohl Überwasser- als auch Unterwasserobjekte hinsichtlich ihrer Geräuschemission untersucht werden sollen, ist eine solche Höhenverstellbarkeit zweckmäßig, da dann die Anordnung unter Wasser hinsichtlich der Ankergewichte, Schwimmkörper und dgl. unverändert beibehalten werden kann und lediglich das Hydrophonarray 12 ferngesteuert verfahren wird.

Zweckmäßigerweise sind zwischen den Ankergewichten 2 und den Seilen 1 autonome akustische Notlöseeinrichtungen vorgesehen, so dass die kostenaufwendigen Hydrophone ggf. schnell und ohne aufwendiges Heben der Ankergewichte 2 geborgen werden können. Solche autonomen akustischen Notlöseeinrichtungen, auch als Releaser bezeichnet, haben den Vorteil, dass auch im Falle des Abreißens aller stromführenden Kabel und Verbindungen die gesamte Anlage von den Ankergewichten 2 gelöst werden kann. Der Auftrieb der Schwimmer ermöglicht dann eine Bergung.

Mit der anhand der Figuren 2 bis 4 vorbeschriebenen Anordnung können akustische Schnitte des vorbeifahrenden Bootes 10 gemacht werden, welche die Schallquellen innerhalb des Bootes auch hinsichtlich der Tiefe bestimmen, so dass der für die jeweilige Schallemission verantwortliche Erzeuger bootseitig eingegrenzt und gut ausfindig gemacht werden kann. Dabei wird die Ortung noch dadurch verbessert, dass eine bidirektionale Kommunikation zwischen dem vorbeifahrenden Objekt 10 und der ortsfesten bzw. begleitbootfesten Auswerteinrichtung besteht, da dann einerseits die Objektzuordnung von erfassten Schallemissionen in der Auswerteinrichtung erleichtert bzw. mit höherer Genauigkeit realisiert werden kann und andererseits während der Vorbeifahrt die Quellen der ermittelten Schallemission aufgefunden werden können. Darüber hinaus kann dabei auch sichergestellt werden, dass die Vorbeifahrt im optimalen Abstand und in der richtigen Richtung erfolgt.

### Bezugszeichenliste

- 1: - Seil
- 2: - Ankergewicht
- 3: - Grund
- 4: - akustischer Releaser
- 5: - Wasseroberfläche
- 6: - Schwimmkörper
- 7: - Hydrophon
- 8: - Antennenstab
- 9: - Fahne
- 10: - U-Boot
- 11: - Schallwellen
- 12: - Hydrophonarray
- 13: - Rahmen
- 14: - Profile innerhalb des Rahmens

## Patentansprüche

1. Vorrichtung zur Erfassung und Ortung von Geräuschemissionen bewegter Objekte (10) in Form von U-Booten unter Wasser, bei der zwei oder mehr Hydrophone (7) mit Abstand übereinander und zwei oder mehr Hydrophone (7) mit Abstand nebeneinander angeordnet sind, deren elektrische Ausgangssignale einer gemeinsamen elektronischen Auswerteeinrichtung zugeführt sind, wobei anhand der zeitlichen Korrelation erfasster Schallwellen (11) eine räumliche Zuordnung der Schallemission erfolgt, **dadurch gekennzeichnet, dass** die Anordnung zur Betrachtung und Analyse spezieller Frequenzen durch definierte Hydrophonabstände abstimmbar ist und dass die Höhenanordnung der Hydrophone (7) zueinander veränderbar ist, wobei mehrere Hydrophone (7) an einem Seil (1) oder Profil (14) motorisch verfahrbar gelagert sind.

2. Vorrichtung nach Anspruch 1, **dadurch gekennzeichnet, dass** ein Rahmen (13) vorgesehen ist, in welchem Profile (14) nebeneinander befestigt sind, an denen jeweils Hydrophone (7) mit Abstand zueinander angeordnet sind, wobei die Rahmen (13) über mindestens zwei Seile (1) befestigt und vorzugsweise motorisch daran verfahrbar sind.

3. Vorrichtung nach Anspruch 1 oder 2, **dadurch gekennzeichnet, dass** das Seil (1) am unteren Ende mittels eines Ankergewichts (2) befestigt und am oberen Ende an einem Schwimmkörper (6) festgelegt ist, wobei der Schwimmkörper (6) vorzugsweise so ausgelegt ist, dass er im Betrieb der Vorrichtung im Wesentlichen unter der Wasseroberfläche (5) angeordnet ist.

4. Vorrichtung nach Anspruch 3, **dadurch gekennzeichnet, dass** eine Release-Vorrichtung (4) zwischen Ankergewicht (2) und Seil (1) vorgesehen ist.

5. Vorrichtung nach einem der vorhergehenden Ansprüche, **dadurch gekennzeichnet, dass** einem Hydrophon (7) ein das Eigengewicht unter Wasser kompensierender Auftriebskörper zugeordnet ist.

6. Vorrichtung nach Anspruch 2, **dadurch gekennzeichnet, dass** dem Rahmen (13) Auftriebskörper zugeordnet sind, die dessen Eigengewicht unter Wasser kompensieren.

7. Vorrichtung nach einem der vorhergehenden Ansprüche, **dadurch gekennzeichnet, dass** zumindest ein Schwimmkörper (6) eine über die Wasseroberfläche herausragende Antenne (8) aufweist, über die drahtlos von den Hydrophonen (7) aufgenommene Messdaten an die Auswerteinrichtung übermittelbar sind.

## Claims

1. A device for detecting and locating noise emissions of moved objects (10) in the form of submarines below water, with which two or more hydrophones (7) are arranged at a distance above one another and two or more hydrophones (7) are arranged at a distance next to one another, whose electrical output signals are led to a common electronic evaluation device, wherein a spatial assignment of the sound emission is effected by way of the temporal correlation of detected sound waves (11), **characterised in that** the arrangement may be tuned for the observation and analysis of special frequencies by way of defined hydrophone distances and that the height arrangement of the hydrophones (7) to one another is changeable, wherein several hydrophones (7) are motorically displaceably mounted on a cable (1) or a profile (14).

2. A device according to claim 1, **characterised in that** a frame (13) is provided, in which profiles (14) are fastened next to one another, on which profiles in each case hydrophones (7) are arranged at a distance to one another, wherein the frames (13) are fastened via at least two cables (1) and are displaceable thereon, preferably in a motoric manner.

3. A device according to claim 1 or 2, **characterised in that** the cable (1) at the lower end is fastened by way of an anchor weight (2) and at the upper end is fixed on a float body (6), wherein the float body (6) is preferably designed such that it is essentially arranged below the water surface (5) on operation of the device.

4. A device according to claim 3, **characterised in that** a release device (4) is provided between the anchor weight (2) and the cable (1).

5. A device according to one of the preceding claims, **characterised in that** a buoyancy body compensating the intrinsic weight below water is assigned to a hydrophone (7).

6. A device according to claim 2, **characterised in that** buoyancy bodies are assigned to the frame (13), which compensate its intrinsic weight below water.

7. A device according to one of the preceding claims, **characterised in that** at least one float body (6) comprises an antenna (8) which projects above the water surface and via which measurement data recorded by the hydrophones (7) may be transmitted to the evaluation device in a wireless manner.

## Revendications

1. Dispositif de détection et de localisation d'émissions sonores d'objets (10) en mouvement sous forme de sous-marins sous l'eau, dans lequel sont disposés deux hydrophones (7) ou plus à distance mutuelle les uns au-dessus des autres et deux hydrophones (7) ou plus à distance mutuelle les uns à côté des autres, dont les signaux de sortie électriques sont acheminés à un dispositif d'évaluation électronique commun, une affectation spatiale de l'émission sonore s'opérant à l'aide de la corrélation temporelle d'ondes sonores (11) détectées, **caractérisé en ce que** le système d'observation et d'analyse de fréquences spéciales est accordable par des distances entre hydrophones définies et **en ce que** l'agencement en hauteur des hydrophones (7) les uns par rapport aux autres est modifiable, plusieurs hydrophones (7) étant montés déplaçables de façon motorisée sur un câble (1) ou profilé (14).

2. Dispositif selon la revendication 1, **caractérisé en ce qu'**est prévu un châssis (13) dans lequel sont fixés côte à côte des profilés (14) sur lesquels des hydrophones (7) sont respectivement disposés à distance les uns des autres, les châssis (13) étant fixés par l'intermédiaire d'au moins deux câbles (1) et déplaçables sur ceux-ci, de préférence de façon motorisée.

3. Dispositif selon la revendication 1 ou 2, **caractérisé en ce que** le câble (1) est fixé à l'extrémité inférieure au moyen d'un poids d'ancrage (2) et, à l'extrémité supérieure, est fixé à un flotteur (6), le flotteur (6) étant, de préférence, conçu de façon à être situé sensiblement au-dessous de la surface de l'eau (5) lorsque le dispositif est en service.

4. Dispositif selon la revendication 3, **caractérisé en ce qu'**un dispositif de déclenchement (4) est prévu entre le poids d'ancrage (2) et le câble (1).

5. Dispositif selon l'une des revendications précédentes, **caractérisé en ce qu'**est associé à un hydrophone (7) un corps de sustentation compensant le poids propre sous l'eau.

6. Dispositif selon la revendication 2, **caractérisé en ce que** sont associés au châssis (13) des corps de sustentation qui en compensent le poids propre sous l'eau.

7. Dispositif selon l'une des revendications précédentes, **caractérisé en ce qu'**au moins un flotteur (6) présente une antenne (8) faisant saillie au-dessus de la surface de l'eau, par l'intermédiaire de laquelle des données de mesure enregistrées par les hydrophones (7) peuvent être transmises sans fil au dispositif d'évaluation.
